# EUROPEAN PATENT SPECIFICATION

(11) **EP 3 943 231 B1**
(45) Date of publication and mention of the grant of the patent: **15.10.2025**
(21) Application number: 21184653.0
(22) Date of filing: 09.07.2021
(51) Int. Cl.: B23Q 1/03, B25B 1/24, B25H 1/10

(54) **SUPPORT ELEMENT TO SUPPORT A DEVICE TO BE POSITIONED ON A WORKING TABLE THROUGH SAID SUPPORT ELEMENT**
STÜTZELEMENT ZUM STÜTZEN EINER AUF EINEM ARBEITSTISCH ZU POSITIONIERENDEN VORRICHTUNG DURCH DIESES STÜTZELEMENT
ÉLÉMENT DE SUPPORT POUR SUPPORTER UN DISPOSITIF À POSITIONNER SUR UNE TABLE DE TRAVAIL AU MOYEN DUDIT ÉLÉMENT DE SUPPORT

(30) Priority: 20.07.2020 IT 202000017563
(43) Date of publication of application: 26.01.2022
(73) Proprietor: SCM Group S.p.A., 47921 Rimini (RN) (IT)
(72) Inventor: BERTUCCIOLI, Alessandro, 47921 RIMINI (IT); SPAZZOLI, Andrea, 47921 RIMINI (IT); VANNUCCI, Carlo, 47921 RIMINI (IT)
(74) Representative: Tiburzi, Andrea

(56) References cited:
- EP-A1- 2 371 488
- DE-A1- 102008 060 126
- DE-A1- 102010 053 657
- DE-U1- 202008 002 364

## Description

The present invention relates to a support element to support a device to be positioned on a working table through said support element.

The term device refers to a positioning and blocking device for positioning and blocking a workpiece on said working table or to a clamping device for clamping a workpiece on said working table.

The term working table means a working table used in a workpiece machining center (in which said workpieces can be panels made of wood or other material) comprising a plurality of bars to support said workpieces and for this reason called "bar working table".

In general, said working table is supported by a basement and said bars are parallel to each other and movable along said basement.

Said working table is mainly used for passing machining (i.e. cutting a panel into parts or drilling through holes on the panel and subsequently machining the edge of the panel).

### Field of the invention

In particular, the invention relates to a support element conceived to be removably coupled to a bar of said working table to support said device on said working table.

In other words, in use, the support element is arranged between said bar and said device, and contacts both said bar and said device.

### Prior art

As is known, in a workpiece machining center, the workpieces are positioned on a working table.

Depending on the type of machining to be performed, this working table can be a multifunction working table or a bar working table.

In the case of using a bar working table, one or more support elements are positioned on one or more bars to support a respective support and blocking device for supporting and blocking a workpiece on said working table, with bars or a respective clamping device for clamping a workpiece on said bar working table.

Currently, a support element is approached to the bar, inserted in a guide formed in said bar, and is made to slide along with said bar to the position in which it is desired to position a support and blocking device or a clamping device.

In a first known technical solution, in order to block the support element to the bar along with the longitudinal direction of the bar itself, the bar is provided with a housing, in which a duct (of reduced dimensions) is housed for the passage of the air, designed to pass from a rest state to an expanded state, in case of the passage of air, and vice-versa.

When a quantity of air is in said duct, the duct expands and blocks said support element to the bar.

In this technical solution, all the support elements arranged on the same bar are blocked to the bar by means of this duct.

Consequently, the conduit operates as a blocking element for all the support elements arranged on the bar.

A disadvantage of said first known technical solution is that it is not possible to block a single support element independently of the other support elements arranged on the bar.

Consequently, when it is necessary to reposition a specific support element on the bar, it is necessary to interrupt the passage of air in the duct, so that all the support elements arranged on the bar are no longer blocked, with the risk that some support elements (other than the specific item it is desired to reposition on the bar) accidentally move along the bar.

In a second known technical solution, said support element can be provided with blocking means, for blocking said support element to a bar, along with the longitudinal direction of the bar itself.

To remove the support element from the bar, said support element is slid up to one end of the bar to be removed.

A disadvantage of said second known technical solution is that it does not allow easy coupling of the support element to the bar, nor easy uncoupling from the bar. DE 20 2008 002364 U1 discloses a support element according to the preamble of claim 1.

### Aim of the invention

The aim of the present invention is to provide a support element designed to be easily coupled/uncoupled to/from a bar of a bar working table.

A second aim of the invention is to provide a support element that can be blocked on a bar of said bar working table independently of further support elements arranged on the same bar.

A further object of the invention is to provide a support element having a simple mechanical structure and a low manufacturing cost.

### Object of the invention

It is, therefore, specific object of the present invention a support element to support a positioning and blocking device for positioning and blocking a workpiece on a working table or a clamping device to clamp a workpiece on said working table, wherein said working table is of the type comprising at least a bar having a longitudinal axis and comprising a support surface, wherein said support element comprises:
- a body comprising a first surface, wherein said first surface has a contact portion intended to contact, in use, said support surface of said bar,
- a coupling and blocking device for coupling and blocking said support element to said bar, movable between a rest position, in which said support element is neither coupled nor blocked to said bar, to an operating position, in which said support element is coupled and blocked to said bar in at least one direction orthogonal to the longitudinal axis of said bar, so that said support element is capable of sliding along said bar, although said support element is blocked.

Said support element is movable between said rest position and said operating position, moving from an intermediate position, wherein said support element is coupled to said bar.

With reference to the coupling and blocking device, said coupling and blocking device may comprise coupling means and blocking means, wherein said coupling means and said blocking means are arranged on a lever, connected to said body, wherein said lever is movable between said rest position, wherein said coupling means do not couple the support element to the bar and said blocking means do not block said means of coupling on said bar, and said operating position, wherein said coupling means couple said support element to the bar and said blocking means block said coupling means on said bar, causing the blocking of said support element on said bar, passing from said intermediate position, wherein said support element is coupled to said bar by means of said coupling means.

Said lever may be rotatably connected to a first portion of said body so as to rotate with respect to said body around a first axis, parallel to the longitudinal axis of said bar.

Said coupling means may comprise at least a relief shaped to make a shape coupling with a first side portion of said bar.

In particular, said coupling means comprise a plurality of protrusions aligned and spaced from each other.

Said blocking means may comprise a first vertical portion, and a second portion rotatably connected to said first portion.

In particular, said first portion may be movable along a second axis, perpendicular to said contact portion, so that said second portion moves from a first position, in which said second portion is arranged on a first plane when said lever is in operating position, to a second position, in which said second portion is arranged on a second plane, different from said first plane and parallel to said first plane, when said lever is in rest position.

Further, said second portion is rotating on said second plane with respect to said second axis, in such a way that said second portion moves from said second position to a third position, in which said second portion is rotated until it is positioned below said lever.

In an alternative, said coupling and blocking device may be slidably connected to said body of said support element to slide from said rest position to said operating position and vice versa.

Advantageously, said support element may comprise further blocking means for blocking said support element on said bar, exerting a pressure along the longitudinal axis of said bar, so to prevent said support element from sliding along said bar, wherein said further blocking means are movable along a third axis, parallel to said second axis and different from said second axis, between an unblocked position, in which said further blocking means do not contact a second side portion of said bar, at a blocking position, in which said further blocking means contact said second side portion of said bar.

Said further blocking means may comprise a head and a body, wherein said body has a lower end portion intended to contact said second side portion of said bar, and said support element may comprise elastic means being movable between a compressed state and an expanded state.

Said elastic means are in a compressed state when said further blocking means are in said unblocking position and said head of said further blocking means exerts a pressure on said elastic means.

Said elastic means are in an expanded state when said further blocking means are in said blocking position and said head of said further blocking means does not exert any pressure on said elastic means.

In particular, said elastic means may comprise one or more first springs and one or more second springs, and said head of said further blocking means may be sized and shaped to contact said first springs and said second springs.

The present invention also relates to a clamping device comprising said support element.

The present invention also relates to a positioning and blocking device comprising said support element.

Furthermore, the present invention relates to a machine tool for working a piece, comprising:
- a basement,
- a working table for supporting said piece, arranged on said basement, wherein said working table comprises one or more bars,
- a working unit for working said piece, movable with respect to said working table along at least three axes.

In particular, said machine tool comprises at least one support element mentioned above and/or at least one clamping device mentioned above and/or at least one positioning and blocking mentioned above.

### List of attached figures

The present invention will be now described, for illustrative but not limitative purposes, according to its preferred embodiments, with particular reference to the figures of the enclosed drawings, wherein:
figure 1A is a first perspective view from above of a support element, according to the present invention;
figure 1B is a first perspective view from the bottom of the support element, according to the present invention;
figure 2A is a second perspective view from above of the support element, according to the present invention;
figure 2B is a second perspective view from the bottom of the support element, according to the present invention;
figure 3A shows in a first example of application (i.e. when said support element supports a clamping device) the support element coupled and blocked to a bar of a bar working table, by means of locking means, in which said blocking means comprise a first portion and a second portion, rotatably connected to said first portion, and said second portion is arranged on a first plane;
figure 3B is a partially sectional side view of the support element of figure 3A;
figure 4A is a perspective view of the support element coupled but not blocked to the bar of the bar working table, in which the second portion of said blocking means is arranged on a second plane;
figure 4B is a partially sectional side view of the support element of Figure 4A;
figure 5A is a perspective view of the support element coupled but not blocked to the bar of the bar working table, in which the second portion of said blocking means is rotated on said second plane;
figure 5B is a partially sectional side view of the support element of figure 5A;
figure 6A is a perspective view of the support element positioned on the bar working table, in which said support element is neither coupled nor blocked to said bar;
figure 6B is a partially sectional side view of the support element of figure 6A;
figure 7A is a perspective view of the support member removed from the bar working table;
figure 7B is a partially sectional side view of the support element of figure 7A;
figure 8 is a top perspective view of the support element, in which a portion has been removed to show further locking means arranged inside said support element;
figure 9 is a perspective view of said further blocking means of the figure 8;
figure 10 is a partially exploded perspective schematic view of a part of the support element to show said further blocking means and the elastic means, on which said further blocking means exert a pressure;
figure 11 is a partially sectional side view of the support element of figure 10, to show said further blocking means and the elastic means, on which said further blocking means exert a pressure;
figure 12A is a partially sectional view of a side portion of said support element to show said further blocking means in the unlocked position;
figure 12B is a schematic sectional view of the side portion shown in figure 12A;
figure 13A is a partially sectional view of a side portion of said support element to show said further blocking means in the blocked position;
figure 13B is a schematic sectional view of the side portion shown in figure 13A;
figure 14A shows in a second example of application (i.e. when said support element supports a positioning and blocking device) the support element coupled and blocked to a bar of a bar working table;
figure 14B is a partially sectional side view of the support element of figure 14A;
figure 15 is a top view of the support element of figure 14A.

In the various figures similar parts will be indicated with the same numerical references.

### Detailed description

With reference to the figures, a support element 1 is described for supporting a device to be positioned on a bar working table by means of said support element.

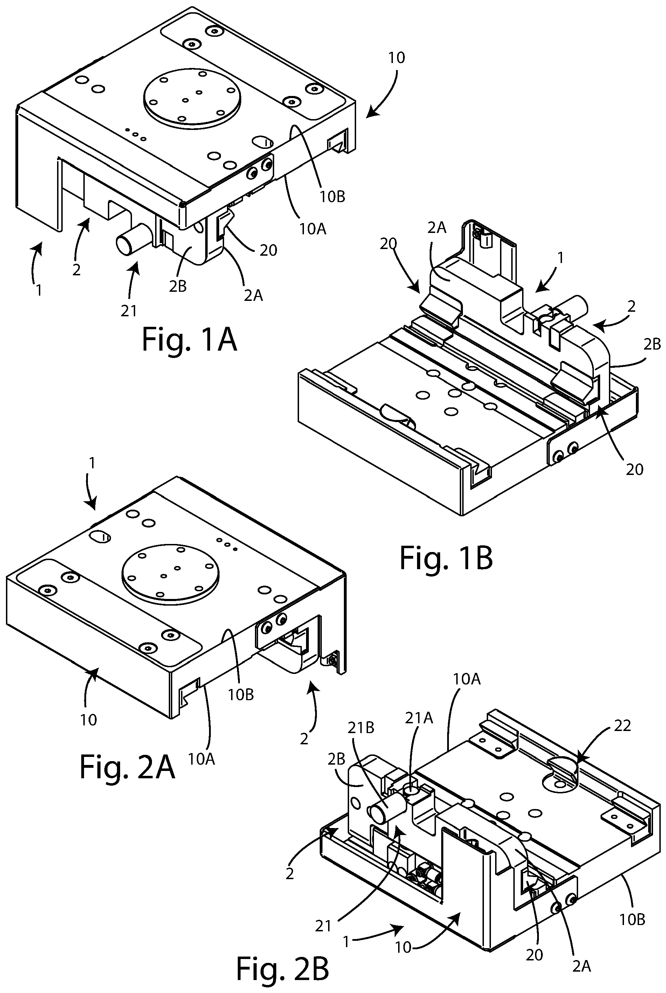

Figures 1A-2B show in detail the support element 1 according to respective views.

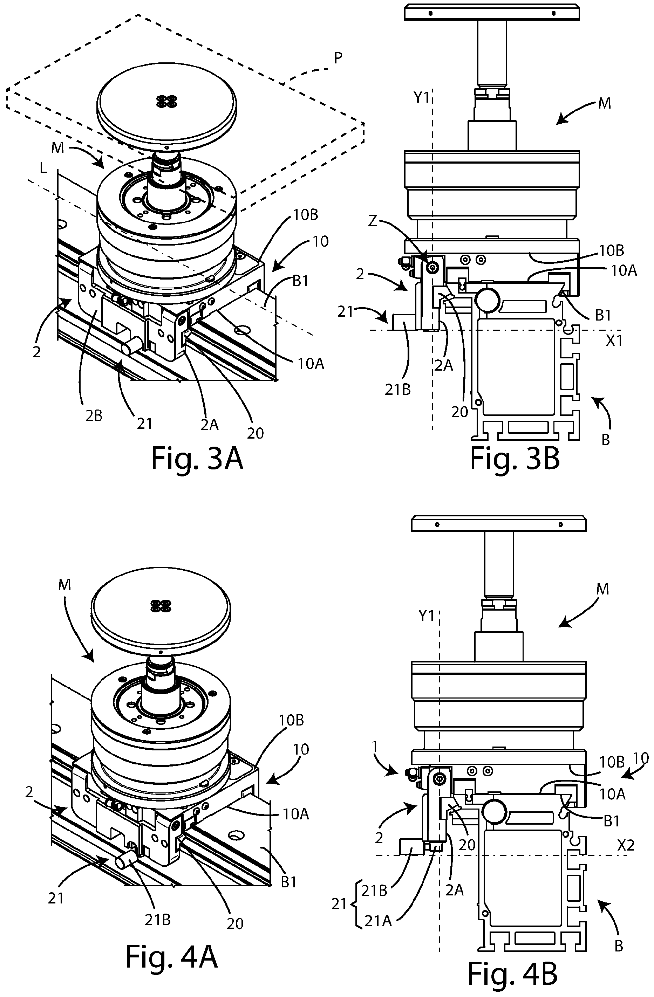

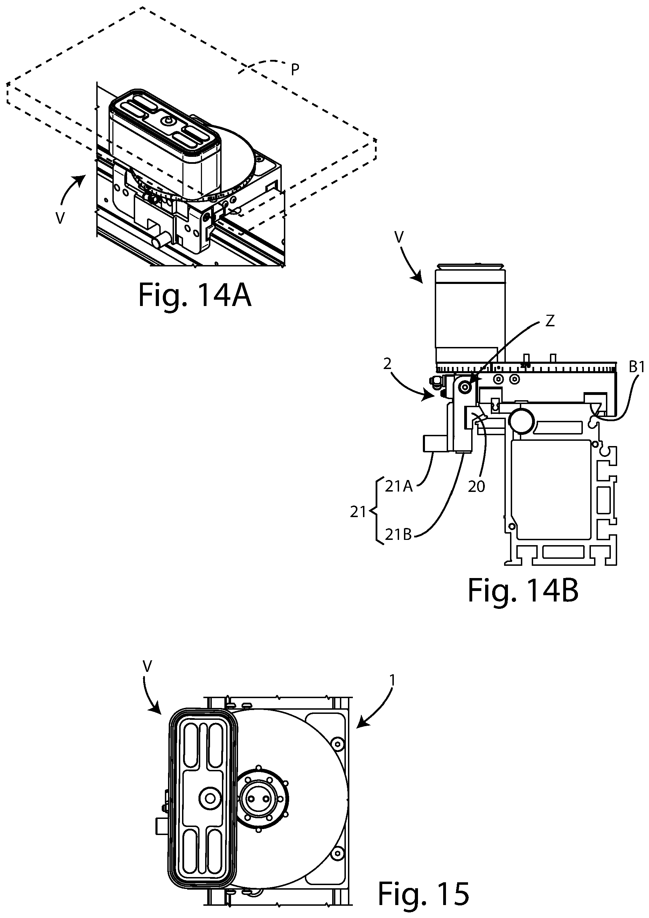

As already mentioned, said device can be a clamping device indicated in figures 3A - 7B with the reference M, or a positioning and blocking device indicated in figures 14A - 15 with the reference V.

The working table comprises at least one bar B having a longitudinal axis L and a supporting surface B1.

With reference to said support element 1, said support element 1 comprises:
- a body 10 comprising a first surface 10A, in which said first surface 10A has a contact portion, intended to contact, in use, said support surface B1 of said bar B,
- a coupling and blocking device for coupling and blocking said support element 1 to said bar B, movable between a rest position, in which said support element 1 is neither coupled nor blocked to said bar B, and an operative position , in which said support element 1 is coupled and blocked to said bar B in at least one direction, orthogonal to the longitudinal axis L of said bar B, so that said support element 1 is able to slide along said bar B although it is blocked.

In particular, said support element 1 is movable between said rest position and said operative position, passing from an intermediate position, wherein said support element 1 is (only) coupled to said bar B.

In other words, when the support element 1 is blocked along the bar B by means of the coupling and blocking device (and consequently is also coupled to the bar B), the support element 1 has a degree of freedom, which allows the support element itself to slide along the longitudinal axis L of the bar B, despite being constrained to the bar itself (i.e. despite being coupled and blocked to the bar B).

In particular, said coupling and blocking device comprises coupling means 20 for coupling said support element 1 to said bar B, and blocking means 21, for blocking said support element 1 on said bar B in said orthogonal direction.

Said coupling means 20 and said blocking means 21 are arranged on a lever 2.

With particular reference to said lever 2, said lever 2 is a rigid element.

In particular, said lever 2 is movable between said rest position (i.e. an opening position of the lever 2), in which said coupling means 20 do not couple the support element 1 to the bar B and said blocking means 21 do not block said coupling means 20 on said bar B, and said operating position (i.e. a closing position of the lever 2), in which said coupling means 20 couple said support element 1 to the bar B, and said blocking means 21 block said means coupling 20 on said bar B, causing the blocking of said support element 1 on said bar B, passing from said intermediate position, in which said support element 1 is coupled to said bar B by means of said coupling means 20 (but not blocked).

Furthermore, said lever 2 is rotatably connected to a first portion of said body 10, in such a way as to rotate with respect to said body 10 around a first axis Z, parallel to the longitudinal axis L of said bar B.

With reference to said coupling means 20, said coupling means 20 are arranged on a first surface or internal surface 2A of the lever 2.

In the embodiment that is described, said coupling means 20 comprise a relief shaped toachieve a shape coupling with a first lateral portion of said bar B.

However, said coupling means 20 can comprise a plurality of relieves aligned and spaced apart, without departing from the scope of the invention.

With reference to said blocking means 21, in the embodiment that is described, said blocking means 21 comprise a first vertical portion 21A, and a second portion 21B rotatably connected to said first portion 21A.

In the embodiment that is described, said second portion 21B projects with respect to a second surface or external surface 2B of the lever 2.

Said first portion 21A is movable along a second axis Y1, perpendicular to said contact portion, so that said second portion 21B passes from a first position, in which said second portion 21B is arranged on a first plane X1, when said lever 2 is in the operative position (figures 3A, 3B), to a second position, in which said second portion 21B is arranged on a second plane X2 (figures 4A, 4B), different from said first plane X1, and parallel to said first plane X1, when said lever 2 is in the rest position.

Figures 3A and 3B show the support element coupled and blocked to a bar of a bar working table.

In particular, these figures show the second portion 21B of said blocking means 21, which is arranged on a first plane X1.

Figures 4A and 4B show the support element 1 coupled to the bar B but not blocked to the bar B.

In particular, these figures show the second portion 21B of said blocking means 21, which is arranged on a second plane X2.

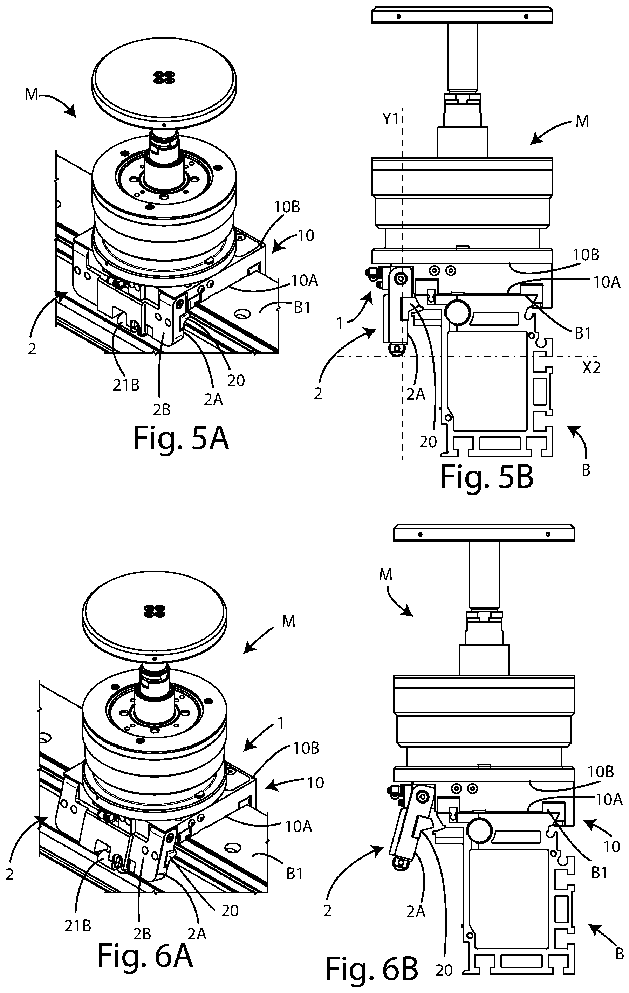

Said second portion 21B rotates on said second plane X2 with respect to said second axis Y1, so that said second portion 21B passes from said second position to a third position, in which said second portion 21B is rotated until it is positioned below said lever 2 (figures 5A, 5B).

Figures 5A and 5B again show the support element 1 coupled to the bar B but not blocked to the bar B.

Differently from what is shown in figures 4A and 4B, figures 5A and 5B show the second portion 21B of said blocking means 21, which is rotated on said second plane X2.

As can be seen from figures 5A and 5B, due to the rotation, said second portion 21B is below the lower end of the lever 2.

As already mentioned, the lever is rotatably connected to the body 10 to rotate around the axis Z, in particular in proximity to the upper end of the lever 2.

Figures 6A and 6B show the support element 1, which is neither coupled nor blocked to the bar B and the lever 2 is rotated with respect to the body 10.

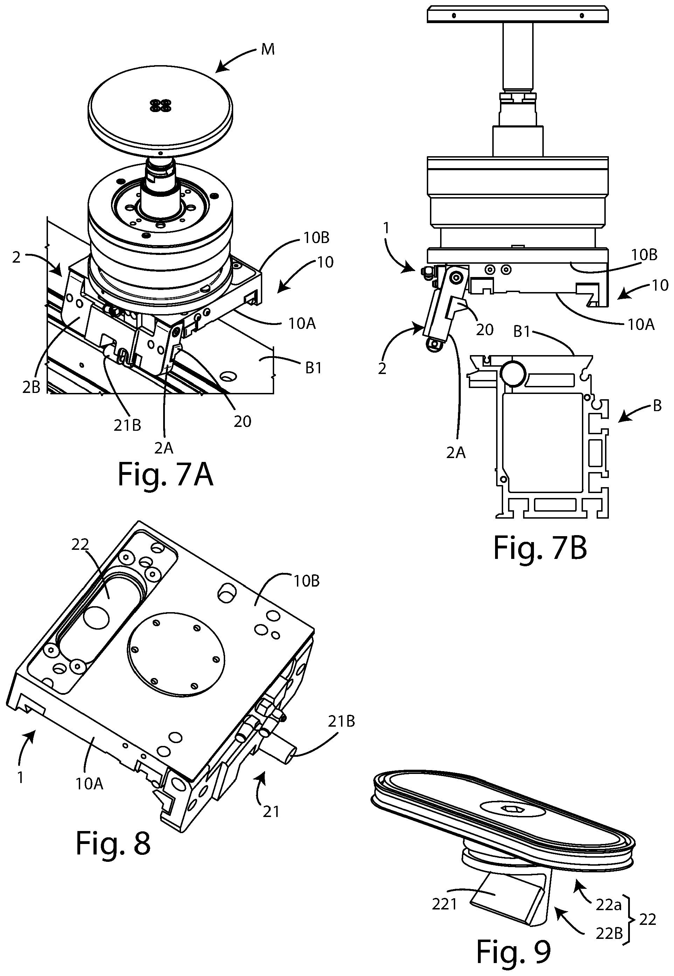

Figures 7A and 7B show the support element 1 removed from the bar B.

In an alternative, not shown in the figures, said coupling means 20 and said blocking means 21 are included in a coupling and blocking device, which is slidably connected to the body 10 of the support element 1, to slide from the rest position to the operative position and vice-versa.

In this alternative, the coupling and blocking device is connected to the body 10 of said support element 1 by means of sliding means.

Said sliding means can comprise one or more guides.

In a first example, said guides can be telescopic guides, each of which is perpendicular to a lateral portion of the body 10 of the support element 1, and extends on a plane parallel or substantially parallel to the plane, on which at least a portion of the first surface 10A of said body 10 lies, such as for example the contact portion.

In a second example, said sliding means can comprise one or more bushings, inside each of which a shaft connected to a lateral portion of the body 10 of the support element 1 slides.

Furthermore, in the embodiment that is described, the support element 1 comprises further blocking means 22 for blocking said support element 1 on said bar B, by exerting a pressure along the longitudinal axis L of the bar B, so as to prevent the support element 1 to slide along said bar B.

As can be seen from figure 8, said further blocking means 22 are partially arranged inside the support element 1, in particular in proximity to a lateral portion of said support element 1.

Figure 9 shows in detail said further blocking means 22.

Said further blocking means 22 comprise a head 22A and a body 22B, and said body 22B has a lower end portion, intended to contact said second lateral portion of said bar B.

An element 221 made of a friction material is arranged on said end portion.

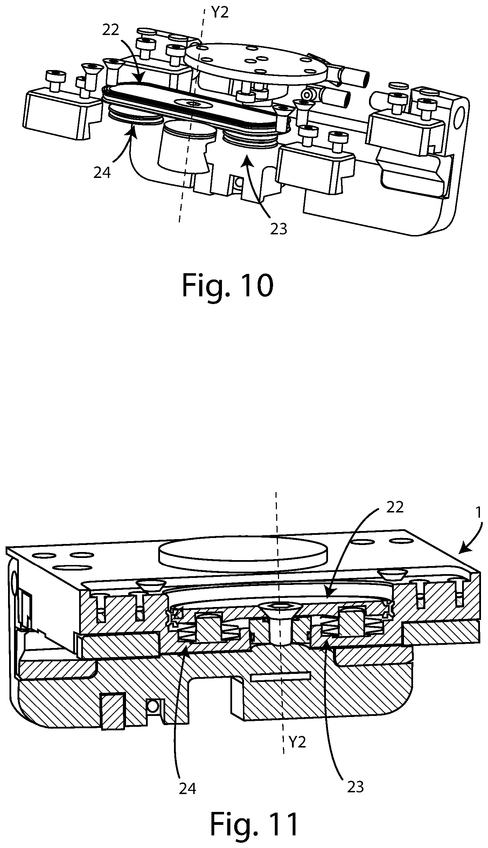

As can be seen from figures 10 to 13B, said further blocking means 22 are movable along a third axis Y2, which is parallel to said second axis Y1 and different from said second axis Y1.

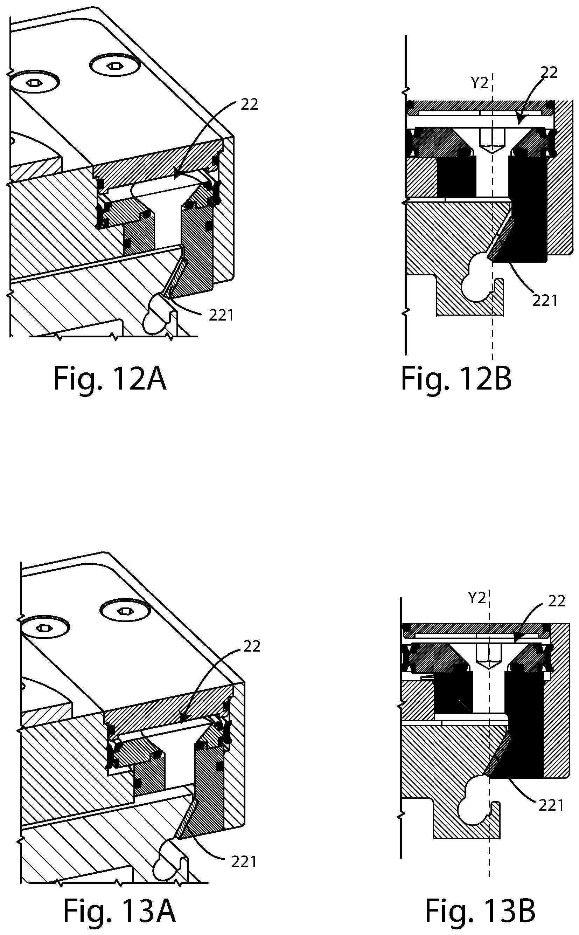

In particular, said further blocking means 22 are movable along said third axis Y2 between an unblocking position, in which said further blocking means 22 do not contact a second lateral portion of said bar B (figures 12A and 12B), to a blocking position, in which said further blocking means 22 contact said second lateral portion of said bar B (figures 13A and 13B).

More particularly, said support element 1 comprises elastic means movable between a compressed state and an expanded state.

Said elastic means are in a compressed state, when said further blocking means 22 are in said unblocking position and said head 22A of said further blocking means 22 exerts a pressure on said elastic means.

Said elastic means are in an expanded state, when said further blocking means 22 are in said blocking position and said head 22A of said further blocking means 22 does not exert any pressure on said elastic means.

Said elastic means can comprise one or more first springs 23 and one or more second springs 24.

The head 22A of said further blocking means 22 is sized and shaped to contact said first springs 23 and said second springs 24.

In the embodiment that is described, said elastic means comprise a first spring 23 and a second spring 24, and the head 22A of said further blocking means 22 contacts said first spring 23 and said second spring 24 (in particular see figures 10 and 11).

As shown in figures 13A to 13B, the body 10 of the support element 1 comprises a second surface 10B, opposite the first surface 10A intended to contact the bar B in use.

In these figures, said second surface 10B is intended to contact, in use, at least partially a base of the clamping device M to be positioned on said bar B.

Although not shown in the figures, in a first variant of said clamping device M, the base of said clamping device M can be removably coupled to said second surface 10B.

In a second variant of the clamping device M, not shown in the figures, said clamping device M can comprise said support element 1.

In this second variant, the base of said clamping device M can be removably coupled to said second surface 10B, or the base of said clamping device can be constituted by said second surface 10B.

In particular, said clamping device M and said support element 1 can be a single piece.

However, said second surface 10B can be intended to contact in use a base of a positioning and blocking device V to be positioned on said bar B.

Figures 14A, 14B and 15 show the second surface 10B of the body 10, which partially contacts the base of a positioning and blocking device V.

The structure of the support element 1 and the operating principle for coupling and blocking the support element 1 to the bar B (although said support element supports a positioning and blocking device V rather than a clamping device M ) remain unchanged.

Although not shown in the figures, in a first variant of said positioning and blocking device V, the base of said positioning and blocking device V can be removably coupled to the second surface 10B of the body 10 of the support element 1.

In a second variant of the positioning and blocking device, not shown in the figures, said positioning and blocking device V can comprise said support element 1.

In this second variant, the base of said positioning and blocking device V can be removably coupled to said second surface 10B or the base of said positioning and blocking device V can be constituted by said second surface 10B.

In particular, said positioning and blocking device V and said support element 1 can be a single piece.

The present invention also refers to a machine tool for working a workpiece P.

This machine tool comprises:
- a basement,
- a working table for supporting said piece P, in which said working table is arranged on said basement and comprises one or more bars,
- a working unit for working said piece P, movable with respect to said working table along at least three axes,
- at least one support element 1 and/or at least one clamping device M (which comprises said support element) and/or at least one positioning and blocking device V (which comprises said support element).

With reference to the working unit, said working unit is movable with respect to said working table along a first axis.

Furthermore, said working unit comprises an operating head movable along with a second axis, perpendicular to said first axis, and along with a third axis, perpendicular to said first axis and to said second axis.

### Advantages

Advantageously, as already mentioned, the support element object of the present invention is conceived to be easily coupled/uncoupled to/from a bar of a bar working table.

In particular, when a support element is to be removed from a bar, it is no longer necessary for it to slide along with the bar, with the consequent loss of time. In fact, to remove said support element from a bar it is sufficient to unblock and uncouple said support element from the bar itself.

A further advantage is given by the fact that said support element is provided with blocking means for stably blocking the support element to a bar of the working table.

## Claims

1. Support element (1) to support a positioning and blocking device (V) for positioning and blocking a piece (P) to be worked on a working table or a clamping device (M) to clamp a piece (P) to be worked on said working table, wherein said working table is of the type comprising at least a bar (B) having a longitudinal axis (L) and comprising a support surface (B1), said support element (1) comprising:
- a body (10) comprising a first surface (10A), wherein said first surface (10A) has a contact portion intended to contact, in use, said support surface (B1) of said bar (B),
- a coupling and blocking device (20,21) for coupling and blocking said support element (1) to said bar (B), movable between a rest position, in which said support element (1) is neither coupled nor blocked to said bar (B), to an operating position, in which said support element (1) is coupled and blocked to said bar (B) in at least one direction orthogonal to the longitudinal axis (L) of said bar (B), so that said support element (1) is capable of sliding along said bar (B), although said support element (1) is blocked,
**characterized in that**
said support element (1) is movable between said rest position and said operating position, moving from an intermediate position, wherein said support element (1) is coupled to said bar (B).

2. Support element (1) according to the previous claim, **characterized in that**
said coupling and blocking device (20,21) comprises coupling means (20) and blocking means (21), wherein said coupling means (20) and said blocking means (21) are arranged on a lever (2), connected to said body (10),
**in that**
said lever (2) is movable between said rest position, wherein said coupling means (20) do not couple the support element (1) to the bar (B) and said blocking means (21) do not block said means of coupling (20) on said bar (B), and said operating position, wherein said coupling means (20) couple said support element (1) to the bar (B) and said blocking means (21) block said coupling means (20) on said bar (B), causing the blocking of said support element (1) on said bar (B), passing from said intermediate position, wherein said support element (1) is coupled to said bar ( B) by means of said coupling means (20).

3. Support element (1) according to the previous claim, **characterized in that** said lever (2) is rotatably connected to a first portion of said body (10) so as to rotate with respect to said body (10) around a first axis (Z), parallel to the longitudinal axis (L) of said bar (B).

4. Support element (1) according to any one of the claims 1-4, **characterized in that** said coupling means (20) comprise at least a relief shaped to make a shape coupling with a first side portion of said bar (B).

5. Support element (1) according to the previous claim, **characterized in that** said coupling means (20) comprise a plurality of protrusions aligned and spaced from each other.

6. Support element (1) according to any of one of the previous claims, **characterized**
**in that**
said blocking means (21) comprises a first vertical portion (21A), and a second portion (21B) rotatably connected to said first vertical portion (21A),
in which
said first vertical portion (21A) is movable along a second axis (Y1), perpendicular to said contact portion, so that said second portion (21B) moves from a first position, in which said second portion (21B) is arranged on a first plane (X1) when said lever (2) is in operating position, to a second position, in which said second portion (21B) is arranged on a second plane (X2), different from said first plane (X1) and parallel to said first plane (X1), when said lever (2) is in rest position, and
said second portion (21B) is rotating on said second plane (X2) with respect to said second axis (Y1), in such a way that said second portion (21B) moves from said second position to a third position, in which said second portion (21B ) is rotated until it is positioned below said lever (2).

7. Support element (1) according to any one of the previous claims, **characterized in that** said coupling and blocking device (20,21) is slidably connected to said body (10) of said support element (1) to slide from said rest position to said operating position and vice versa.

8. Support element (1) according to any one of previous claims, **characterized in that** said support element (1) comprises further blocking means (22) for blocking said support element (1) on said bar (B), exerting a pressure along the longitudinal axis (L) of said bar (B), so to prevent said support element (1) from sliding along said bar (B), wherein said further blocking means (22) are movable along a third axis (Y2), parallel to said second axis (Y1) and different from said second axis (Y1), between an unblocked position, in which said further blocking means (22) do not contact a second side portion of said bar (B), at a blocking position, in which said further blocking means (22) contact said second side portion of said bar (B).

9. Support element (1) according to the previous claim, **characterized in that**
said further blocking means (22) comprise a head (22A) and a body (22B), wherein said body (22B) has a lower end portion intended to contact said second side portion of said bar (B),
**in that**
said support element (1) comprises elastic means (23, 24) being movable between a compressed state and an expanded state, wherein
said elastic means (23,24) are in a compressed state when said further blocking means (22) are in said unblocking position and said head (22A) of said further blocking means (22) exerts a pressure on said elastic means (23,24), and
said elastic means (23,24) are in an expanded state when said further blocking means (22) are in said blocking position and said head (22A) of said further blocking means (22) does not exert any pressure on said elastic means (23,24).

10. Support element (1) according to the previous claim, **characterized**
**in that**
said elastic means (23,24) comprise one or more first springs (23) and one or more second springs (24), and
**in that**
said head (22A) of said further blocking means (22) is sized and shaped to contact said first springs (23) and said second springs (24).

11. Clamping device (M) comprising said support element (1) according to any one of claims 1-10.

12. Positioning and blocking device (V) comprising said support element (1) according to any one of claims 1-10.

13. Machine tool for working a piece (P), comprising:
- a basement,
- a working table for supporting said piece (P), arranged on said basement, wherein said working table comprises one or more bars,
- a working unit for working said piece (P), movable with respect to said working table along three axes,
**characterized in that**
said machine tool comprises at least one support element (1) according to any one of claims 1-10 and/or at least one clamping device (M) according the claim 11 and/or at least one positioning and blocking device (V) according to claim 12.

## Patentansprüche

1. Stützelement (1) zum Stützen einer Positionier- und Blockiervorrichtung (V) zum Positionieren und Blockieren eines zu bearbeitenden Werkstücks (P) auf einem Arbeitstisch oder einer Klemmvorrichtung (M) zum Einspannen eines zu bearbeitenden Werkstücks (P) auf dem Arbeitstisch, wobei der Arbeitstisch von der Art ist, die mindestens eine Stange (B) mit einer Längsachse (L) und eine Stützfläche (B1) umfasst, wobei das Stützelement (1) umfasst:
- einen Körper (10) mit einer ersten Fläche (10A), wobei die erste Fläche (10A) einen Kontaktabschnitt aufweist, der dazu bestimmt ist, im Gebrauch die Stützfläche (B1) der Stange (B) zu berühren,
- eine Kupplungs- und Blockier Vorrichtung (20,21) zum Kuppeln und Blockieren des Stützelements (1) mit der Stange (B), die zwischen einer Ruheposition, in der das Stützelement (1) weder mit der Stange (B) gekoppelt noch blockiert ist, und einer Betriebsposition beweglich ist, in der das Stützelement (1) mit der Stange (B) in mindestens einer Richtung orthogonal zur Längsachse (L) der Stange (B) gekoppelt und blockiert ist, so dass das Stützelement (1) entlang der Stange (B) gleiten kann, obwohl das Stützelement (1) blockiert ist,
**dadurch gekennzeichnet, dass**
das Stützelement (1) zwischen der Ruheposition und der Betriebsposition beweglich ist, wobei es sich von einer Zwischenposition aus bewegt, wobei das Stützelement (1) mit der Stange (B) verbunden ist.

2. Stützelement (1) nach dem vorhergehenden Anspruch, **dadurch gekennzeichnet, dass**
die Kupplungs- und Blockiervorrichtung (20,21) Kupplungsmittel (20) und Blockiermittel (21) umfasst, wobei die Kupplungsmittel (20) und die Blockiermittel (21) an einem Hebel (2) angeordnet sind, der mit dem Körper (10) verbunden ist,
**dadurch gekennzeichnet, dass**
der Hebel (2) zwischen der Ruhestellung, in der die Kupplungsmittel (20) das Stützelement (1) nicht mit der Stange (B) kuppeln und die Blockiermittel (21) die Kupplungsmittel (20) auf der Stange (B) nicht blockieren, und der Betriebsstellung beweglich ist, wobei die Kopplungsmittel (20) das Stützelement (1) mit der Stange (B) koppeln und die Blockiermittel (21) die Kopplungsmittel (20) auf der Stange (B) blockieren, was die Blockierung des Stützelements (1) auf der Stange (B) bewirkt, wenn man von der Zwischenposition übergeht, wobei das Stützelement (1) mit der Stange (B) mittels der Kopplungsmittel (20) gekoppelt ist.

3. Stützelement (1) nach dem vorhergehenden Anspruch, **dadurch gekennzeichnet, dass** der Hebel (2) drehbar mit einem ersten Abschnitt des Körpers (10) verbunden ist, so dass er sich in Bezug auf den Körper (10) um eine erste Achse (Z) dreht, die parallel zur Längsachse (L) der Stange (B) verläuft.

4. Stützelement (1) nach einem der Ansprüche 1-4**, dadurch gekennzeichnet, dass** die Kopplungsmittel (20) mindestens ein Relief aufweisen, das so geformt ist, dass es eine Formkopplung mit einem ersten Seitenabschnitt der Stange (B) herstellt.

5. Stützelement (1) nach dem vorhergehenden Anspruch, **dadurch gekennzeichnet, dass** die Kupplungsmittel (20) eine Vielzahl von fluchtenden und voneinander beabstandeten Vorsprüngen aufweisen.

6. Stützelement (1) nach einem der vorhergehenden Ansprüche,
**dadurch gekennzeichnet, dass**
die Blockiereinrichtung (21) einen ersten vertikalen Abschnitt (21A) und einen zweiten Abschnitt (21B) umfasst, der drehbar mit dem ersten vertikalen Abschnitt (21A) verbunden ist,
in dem
der erste vertikale Abschnitt (21A) entlang einer zweiten Achse (Y1) senkrecht zu dem Kontaktabschnitt beweglich ist, so dass sich der zweite Abschnitt (21B) von einer ersten Position, in der der zweite Abschnitt (21B) auf einer ersten Ebene (X1) angeordnet ist, wenn sich der Hebel (2) in der Betriebsposition befindet, in eine zweite Position bewegt, in der der zweite Abschnitt (21B) auf einer zweiten Ebene (X2) angeordnet ist, die sich von der ersten Ebene (X1) unterscheidet und parallel zu der ersten Ebene (X1) ist. wenn der Hebel (2) in der Ruhestellung ist, und der zweite Abschnitt (21B) sich auf der zweiten Ebene (X2) in Bezug auf die zweite Achse (Y1) so dreht, dass sich der zweite Abschnitt (21B) von der zweiten Position in eine dritte Position bewegt, in der der zweite Abschnitt (21B) gedreht wird, bis er sich unter dem Hebel (2) befindet.

7. Stützelement (1) nach einem der vorhergehenden Ansprüche, **dadurch gekennzeichnet, dass** die Kupplungs- und Blockiervorrichtung (20,21) verschiebbar mit dem Körper (10) des Stützelements (1) verbunden ist, um von der Ruheposition in die Betriebsposition und umgekehrt zu gleiten.

8. Stützelement (1) nach einem der vorhergehenden Ansprüche, **dadurch gekennzeichnet, dass** das Stützelement (1) weitere Blockiermittel (22) zum Blockieren des Stützelements (1) auf der Stange (B) umfasst, die einen Druck entlang der Längsachse (L) der Stange (B) ausüben, um so zu verhindern, dass das Stützelement (1) entlang der Stange (B) gleitet, wobei die weiteren Blockiermittel (22) entlang einer dritten Achse (Y2), die parallel zu der zweiten Achse (Y1) verläuft und sich von der zweiten Achse (Y1) unterscheidet, zwischen einer nicht blockierten Position, in der die weiteren Blockiermittel (22) einen zweiten Seitenabschnitt der Stange (B) nicht berühren, und einer Blockierposition, in der die weiteren Blockiermittel (22) den zweiten Seitenabschnitt der Stange (B) berühren, bewegbar sind.

9. Stützelement (1) nach dem vorhergehenden Anspruch, **dadurch gekennzeichnet, dass**
die weiteren Blockiermittel (22) einen Kopf (22A) und einen Körper (22B) umfassen, wobei der Körper (22B) einen unteren Endabschnitt aufweist, der dazu bestimmt ist, den zweiten Seitenabschnitt der Stange (B) zu berühren,
**dadurch gekennzeichnet, dass**
das Stützelement (1) elastische Mittel (23,24) umfasst, die zwischen einem komprimierten Zustand und einem expandierten Zustand beweglich sind, wobei
die elastischen Mittel (23,24) sich in einem komprimierten Zustand befinden, wenn die weiteren Blockiermittel (22) in der Freigabeposition sind und der Kopf (22A) der weiteren Blockiermittel (22) einen Druck auf die elastischen Mittel (23,24) ausübt, und die elastischen Mittel (23,24) in einem ausgedehnten Zustand sind, wenn die weiteren Blockiermittel (22) in der Blockierposition sind und der Kopf (22A) der weiteren Blockiermittel (22) keinen Druck auf die elastischen Mittel (23,24) ausübt.

10. Stützelement (1) gemäß dem vorhergehenden Anspruch, **dadurch gekennzeichnet, dass**
**dadurch gekennzeichnet, dass**
die elastischen Mittel (23,24) eine oder mehrere erste Federn (23) und eine oder mehrere zweite Federn (24) umfassen, und
**dadurch gekennzeichnet, dass**
der Kopf (22A) des weiteren Blockiermittels (22) so bemessen und geformt ist, dass er die ersten Federn (23) und die zweiten Federn (24) berührt.

11. Spannvorrichtung (M) mit dem Stützelement (1) nach einem der Ansprüche 1-10.

12. Positionier- und Blockiervorrichtung (V) mit diesem Träger
Element (1) nach einem der Ansprüche 1-10.

13. Werkzeugmaschine zur Bearbeitung eines Werkstücks (P), umfassend:
- einen Unterbau
- einen Arbeitstisch zum Tragen des Werkstücks (P), der auf dem Sockel angeordnet ist, wobei der Arbeitstisch eine oder mehrere Stangen umfasst,
- eine Bearbeitungseinheit zur Bearbeitung des Werkstücks (P), die in Bezug auf den Bearbeitungstisch entlang dreier Achsen beweglich ist.
**dadurch gekennzeichnet, dass**
die Werkzeugmaschine mindestens ein Trägerelement (1) nach einem der Ansprüche 1-10 und/oder mindestens eine Spannvorrichtung (M) nach Anspruch 11 und/oder mindestens eine Positionier- und Blockiervorrichtung (V) aufweist
nach Anspruch 12.

## Revendications

1. Élément de support (1) pour supporter un dispositif de positionnement et de blocage (V) pour positionner et bloquer une pièce (P) à travailler sur une table de travail ou un dispositif de serrage (M) pour serrer une pièce (P) à travailler sur ladite table de travail, dans lequel ladite table de travail est du type comprenant au moins une barre (B) ayant un axe longitudinal (L) et comprenant une surface d'appui (B1), ledit élément de support (1) comprenant:
- un corps (10) comprenant une première surface (10A), dans laquelle ladite première surface (10A) présente une partie de contact destinée à entrer en contact, lors de l'utilisation, avec ladite surface de support (B1) de ladite barre (B),
- un dispositif de couplage et de blocage (20,21) pour coupler et bloquer ledit élément de support (1) à ladite barre (B), mobile entre une position de repos, dans laquelle ledit élément de support (1) n'est ni couplé ni bloqué à ladite barre (B), et une position de fonctionnement, dans laquelle ledit élément de support (1) est couplé et bloqué à ladite barre (B) dans au moins une direction orthogonale à l'axe longitudinal (L) de ladite barre (B), de sorte que ledit élément de support (1) est capable de glisser le long de ladite barre (B), bien que ledit élément de support (1) soit bloqué,
**caractérisé en ce que**
ledit élément de support (1) est mobile entre ladite position de repos et ladite position de fonctionnement, à partir d'une position intermédiaire, ledit élément de support (1) étant couplé à ladite barre (B).

2. Élément de support (1) selon la revendication précédente, **caractérisé en ce que**
ledit dispositif de couplage et de blocage (20,21) comprend des moyens de couplage (20) et des moyens de blocage (21), lesdits moyens de couplage (20) et lesdits moyens de blocage (21) étant disposés sur un levier (2) relié audit corps (10),
**en ce que**
ledit levier (2) est mobile entre ladite position de repos, dans laquelle lesdits moyens de couplage (20) ne couplent pas l'élément de support (1) à la barre (B) et lesdits moyens de blocage (21) ne bloquent pas lesdits moyens de couplage (20) sur ladite barre (B), et ladite position de fonctionnement, dans laquelle lesdits moyens de couplage (20) couplent ledit élément de support (1) à la barre (B) et lesdits moyens de blocage (21) bloquent lesdits moyens de couplage (20) sur ladite barre (B), provoquant le blocage dudit élément de support (1) sur ladite barre (B), en passant par ladite position intermédiaire, dans laquelle ledit élément de support (1) est couplé à ladite barre (B) au moyen desdits moyens de couplage (20).

3. Élément de support (1) selon la revendication précédente, **caractérisé en ce que** ledit levier (2) est relié de manière rotative à une première partie dudit corps (10) de façon à tourner par rapport audit corps (10) autour d'un premier axe (Z), parallèle à l'axe longitudinal (L) de ladite barre (B).

4. Élément de support (1) selon l'une des revendications 1-4, **caractérisé par le fait que** les moyens de couplage (20) comprennent au moins un relief formé pour réaliser un couplage de forme avec une première partie latérale de ladite barre (B).

5. Élément de support (1) selon la revendication précédente, **caractérisé en ce que** lesdits moyens de couplage (20) comprennent une pluralité de protubérances alignées et espacées les unes des autres.

6. Élément de support (1) selon l'une quelconque des revendications précédentes, **caractérisé**
**en ce que**
ledit moyen de blocage (21) comprend une première partie verticale (21A) et une seconde partie (21B) reliée de manière rotative à ladite première partie verticale (21A),
dans lequel
ladite première partie verticale (21A) est mobile le long d'un deuxième axe (Y1), perpendiculaire à ladite partie de contact, de sorte que ladite deuxième partie (21B) passe d'une première position, dans laquelle ladite deuxième partie (21B) est disposée sur un premier plan (X1) lorsque ledit levier (2) est en position de fonctionnement, à une deuxième position, dans laquelle ladite deuxième partie (21B) est disposée sur un deuxième plan (X2), différent dudit premier plan (X1) et parallèle audit premier plan (X1), lorsque ledit levier (2) est en position de repos, et
ladite deuxième partie (21B) tourne sur ledit deuxième plan (X2) par rapport audit deuxième axe (Y1), de telle sorte que ladite deuxième partie (21B) passe de ladite deuxième position à une troisième position, dans laquelle ladite deuxième partie (21B) est tournée jusqu'à ce qu'elle soit positionnée en dessous dudit levier (2).

7. Élément de support (1) selon l'une quelconque des revendications précédentes, **caractérisé en ce que** ledit dispositif de couplage et de blocage (20,21) est relié de manière coulissante audit corps (10) dudit élément de support (1) pour glisser de ladite position de repos à ladite position de fonctionnement et vice versa.

8. Élément de support (1) selon l'une quelconque des revendications précédentes, **caractérisé en ce que** ledit élément de support (1) comprend d'autres moyens de blocage (22) pour bloquer ledit élément de support (1) sur ladite barre (B), en exerçant une pression le long de l'axe longitudinal (L) de ladite barre (B), afin d'empêcher ledit élément de support (1) de glisser le long de ladite barre (B), dans lequel lesdits autres moyens de blocage (22) sont mobiles le long d'un troisième axe (Y2), parallèle audit deuxième axe (Y1) et différent dudit deuxième axe (Y1), entre une position non bloquée, dans laquelle lesdits autres moyens de blocage (22) n'entrent pas en contact avec une deuxième partie latérale de ladite barre (B), et une position de blocage, dans laquelle lesdits autres moyens de blocage (22) entrent en contact avec ladite deuxième partie latérale de ladite barre (B).

9. Élément de support (1) selon la revendication précédente, **caractérisé en ce que**
lesdits autres moyens de blocage (22) comprennent une tête (22A) et un corps (22B), dans lequel ledit corps (22B) a une partie d'extrémité inférieure destinée à entrer en contact avec ladite deuxième partie latérale de ladite barre (B),
**en ce que**
ledit élément de support (1) comprend des moyens élastiques (23,24) mobiles entre un état comprimé et un état expansé, dans lequel
lesdits moyens élastiques (23,24) sont dans un état comprimé lorsque lesdits autres moyens de blocage (22) sont dans ladite position de déblocage et ladite tête (22A) desdits autres moyens de blocage (22) exerce une pression sur lesdits moyens élastiques (23,24), et
lesdits moyens élastiques (23,24) sont dans un état d'expansion lorsque lesdits autres moyens de blocage (22) sont dans ladite position de blocage et que ladite tête (22A) desdits autres moyens de blocage (22) n'exerce aucune pression sur lesdits moyens élastiques (23,24).

10. Élément de support (1) selon la revendication précédente, **caractérisé**
**en ce que**
lesdits moyens élastiques (23, 24) comprennent un ou plusieurs premiers ressorts (23) et un ou plusieurs seconds ressorts (24), et
**en ce que**
ladite tête (22A) dudit autre moyen de blocage (22) est dimensionnée et formée pour entrer en contact avec lesdits premiers ressorts (23) et lesdits seconds ressorts (24).

11. Dispositif de serrage (M) comprenant ledit élément de support (1) selon l'une quelconque des revendications 1-10.

12. Dispositif de positionnement et de blocage (V) comprenant ledit support
élément (1) selon l'une quelconque des revendications 1-10.

13. Machine-outil pour l'usinage d'une pièce (P), comprenant:
- un socle,
- une table de travail pour supporter ladite pièce (P), disposée sur ledit sous-sol, dans laquelle ladite table de travail comprend une ou plusieurs barres,
- une unité de travail pour travailler ladite pièce (P), mobile par rapport à la table de travail selon trois axes,
**caractérisé en ce que**
ladite machine-outil comprend au moins un élément de support (1) selon l'une quelconque des revendications 1-10 et/ou au moins un dispositif de serrage (M) selon la revendication 11 et/ou au moins un dispositif de positionnement et de blocage (V)
selon la revendication 12.
